(19) Europäisches Patentamt
European Patent Office
Office européen des brevets

(11) Numéro de publication: **0 002 418**
**B1**

(12) **FASCICULE DE BREVET EUROPEEN**

(45) Date de publication du fascicule de brevet: **14.10.81**

(51) Int. Cl.³: **C 08 L 23/02**, C 08 J 3/24, C 08 K 5/36

(21) Numéro de dépôt: **78400218.0**

(22) Date de dépôt: **06.12.78**

(54) **Procédé de fabrication de produits extrudés à base de compositions polyoléfiniques.**

(30) Priorité: **06.12.77 FR 7736717**

(43) Date de publication de la demande:
**13.06.79 Bulletin 79/12**

(45) Mention de la délivrance du brevet:
**14.10.81 Bulletin 81/41**

(84) Etats Contractants Désignés:
**BE CH DE GB IT LU NL SE**

(56) Documents cités:
BE - A - 650 421
DE - A - 1 569 433
DE - A - 2 432 758
FR - A - 2 297 713

(73) Titulaire: **SOCIETE ANONYME DE TELECOMMUNICATIONS**
**40 avenue de New York**
**F-75116 Paris (FR)**

(72) Inventeur: **Arnaud, Claude Jean**
**32bis route d'Amezat**
**F-63200 Riom (FR)**
Inventeur: **Roche, Gaston Pierre**
**36 route de Marsat**
**F-63200 Riom (FR)**
Inventeur: **Quemner, Jean Maurice**
**1 rue Jean Maupoimp**
**F-63000 Clermont-Ferrand (FR)**

(74) Mandataire: **Bloch, Robert**
**39 avenue de Friedland**
**F-75008 Paris (FR)**

**EP 0 002 418 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Procédé de fabrication de produits extrudés à base de compositions polyoléfiniques

La présente invention concerne la fabrication de produits extrudés à base de compositions polyoléfiniques et leur application à la formation de couches isolantes ou semi-conductrices d'enveloppes de câbles électriques basse, moyenne et haute tension.

Par compositions polyoléfiniques, on entend, en particulier, les compositions à base de polymères de l'éthylène, par exemple les polyéthylènes, les polypropylènes, de copolymères et terpolymères dont un des composants est un polymère de l'éthylène, par exemple les copolymères éthylène-propylène (EPM), les terpolymères éthylène-propolyène-diène (EPDM), les copolymères éthylène-acètate de vinyle (EVA) et de mélanges dont un des produits de base est un polymère de l'éthylène.

Ces compositions polyoléfiniques sont habituellement extrudées puis réticulées afin de pouvoir être utilisées à des températures élevées. Cette opération de réticulation permet, en effet, à la matière isolante de supporter des températures de service continues de l'ordre de 90°C tout en conservant une bonne résistance à l'écrasement. Cette température peut, en outre, être élevée jusqu'à 200—250°C, grâce à la réticulation, pendant de courtes durées sans dommage appréciable pour l'isolant.

La demande de brevet FR—A—2 297 713 préconise un procédé d'introduction d'un agent de réticulation dans la composition polyoléfinique en une seule opération, directement à l'entrée de l'extrudeuse afin d'éviter l'élaboration préalable du mélange, comme il était d'usage dans les techniques antérieures.

Cependant la composition polyoléfinique est soumise, au cours de son extrusion et ultérieurement au cours de son utilisation comme enveloppe de câble, à une oxydation thermique et photothermique. Cette oxydation intervient aussi bien au cours du vieillissement à l'air qu'au cours de la phase de réticulation elle-même. Cette oxydation a pour effet de faire varier des caractéristiques mécaniques de la composition.

L'adjonction d'un anti-oxydant permettrait ainsi de protéger ces compositions de l'oxydation et d'assurer au produit fini une bonne stabilité thermique et photothermique.

Cependant l'anti-oxydant ou même les anti-oxydants utilisés ne doivent pas inhiber la réticulation de la composition. De plus, ils doivent supporter, sans perte appréciable, les températures de réticulation et ultérieurement les températures de service du câble. En outre ces anti-oxydants doivent être pureté suffisante pour ne pas modifier les propriétés diélectriques de l'enveloppe de câble. De telles conditions limitent le choix des anti-oxydants applicables aux compositions polyoléfiniques réticulables.

La demande précitée préconise l'emploi d'anti-oxydants mélangés à l'agent de réticulation, par exemple du peroxyde, afin d'éviter la phase préalable de mélangeage et les irrégularités de dosage pouvant intervenir lorsque l'additif est introduit à l'entrée de l'extrudeuse. La demande précitée mentionne, parmi les anti-oxydants solubles dans le peroxyde, des anti-oxydants phénoliques, comme par exemple le 4,4-thio-bis (6-tert.-butyl-metacresol). Cependant, un tel anti-oxydant a un point de fusion de l'ordre de 158°C/160°C, supérieur aux températures mises en oeuvre au cours de l'extrusion et provoque un dépôt de poudre et une formation de croûte sur les parties métalliques de la vis et du corps de l'extrudeuse. Il se produit ainsi des irrégularités et des défauts dans la matière extrudée.

La présente invention vise à améliorer l'efficacité de l'anti-oxydant par un choix d'un produit ayant des qualités compatibles avec le traitement thermique d'extrusion puis de réticulation, auquel la composition polyoléfinique est soumise, et compatibles avec le vieillissement photothermique. Le produit choisi dans la présente invention est compatible avec le procédé d'introduction de l'agent de réticulation aux conditions de température et de pression préconisées dans la demande précitée.

Le procédé de fabrication de produits extrudés, selon l'invention, à base de compositions polyoléfiniques réticulées, du type dans lequel on introduit directement à l'entrée de la machine d'extrusion, en même temps que la composition à réticuler, un peroxyde organique liquide, volatil et inflammable à la pression atmosphérique comme agent de réticulation et, comme agent protecteur, un anti-oxydant, est caractérisé par le fait que l'anti-oxydant est un composé de formule développée:

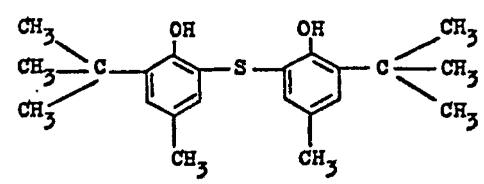

Ce produit permet de réaliser des isolants de câbles électriques moyenne et haute tension présentant une très grande pureté et homogénéité de la matière isolante.

D'autres avantages apparaîtront à la lecture de la description suivante.

L'anti-oxydant selon l'invention se présente sous forme solide, de poudre ou de granulés et peut être introduit directement dans le réservoir contenant l'agent de réticulation tel que le peroxyde liquide. Cet anti-oxydant est dissous dans le peroxyde au moyen d'une agitation appropriée, par exemple par l'action d'un agitateur à hélice ou d'une pompe de circulation.

L'anti-oxydant ainsi utilisé doit en outre satisfaire aux exigences imposées aux isolants de câbles tant au cours de leur fabrication qu'au cours de leur utilisation. En effet, avant d'être réticulées à des températures de l'ordre de 220°—250°C, les compositions polyoléfiniques, dans lesquelles l'anti-oxydant est introduit, subissent l'opération d'extrusion qui soumet les corps en présence à des températures de l'ordre de 125°C—135°C nécessaires à la fusion de ces compositions sans toutefois les faire réticuler. Ainsi l'anti-oxydant de l'invention est choisi pour sa température de fusion inférieure aux températures de réglage des différentes sections de l'extrudeuse dans laquelle la matière est mise en oeuvre. En outre l'anti-oxydant de l'invention doit présenter une solubilité maximale dans le peroxyde liquide afin d'assurer une répartition parfaitement homogène dans l'isolant du câble. Cet anti-oxydant doit en outre présenter une grande pureté, ce qui peut être atteint en lui faisant subir une ou plusieurs recristallisations. De plus l'anti-oxydant et le peroxyde formant une composition de deux corps de fonction différente, capteur de radicaux libres pour l'un et donneur de radicaux libres pour l'autre, l'anti-oxydant de l'invention aura la plus faible action inhibitrice vis-à-vis des peroxydes organiques. C'est ainsi que, dans la composition polyoléfinique, les deux corps en présence pourront remplir efficacement leur rôle spécifique.

L'anti-oxydant, satisfaisant aux qualités requises pour les isolants de câbles électriques et leur fabrication, est un thio-bis phénol complètement soluble dans le peroxyde, ayant un point de fusion de 84°C/86°C et de formule développée:

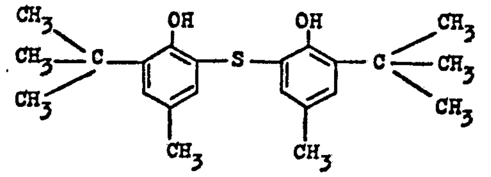

Un tel anti-oxydant est ainsi complètement fondu à l'intérieur de l'extrudeuse et se répartit dans la résine de base suivant une meilleure distribution et permet une parfaite homogénéité du compound formé par la résine de base avec l'anti-oxydant et le peroxyde. Il évite également la formation de croûte sur les parties métalliques de la vis et du corps de l'extrudeuse.

Un autre mode de mise en oeuvre de l'anti-oxydant, selon l'invention, consiste à introduire cet anti-oxydant dans une première phase dans la résine de base au cours d'une opération séparée. La composition polyoléfinique contenant l'anti-oxydant est alors introduite dans l'extrudeuse simultanément avec le peroxyde liquide suivant le procédé préconisé dans la demande de brevet FR—A—2297713 précitée. Un tel procédé permet également de mettre en oeuvre l'anti-oxydant selon l'invention et de lui laisser jouer son rôle protecteur avec le maximum d'efficacité. En effet le peroxyde liquide pénètre dans la résine par diffusion et sous l'action du brassage donné par la vis de l'extrudeuse. Le mélange peroxyde-résine est généralement plus homogène que le mélange anti-oxydant-résine parce que l'affinité du peroxyde pour la résine est plus grande et que sa proportion dans la résine est supérieure à celle de l'anti-oxydant, habituellement de 10 fois supérieure. Comme l'anti-oxydant est soluble dans le peroxyde, sa répartition dans la résine de base est améliorée après l'introduction du peroxyde dans la résine en suivant la meilleure distribution de ce peroxyde. On obtient de la sorte, à la sortie de l'extrudeuse, un compound résine de base/anti-oxydant/peroxyde parfaitement homogène.

L'anti-oxydant de l'invention est introduit, selon l'un ou l'autre procédé, dans des proportions bien déterminées de l'ordre de 0,15 à 0,35% en poids par rapport à la résine de base de la composition polyoléfinique. Un tel anti-oxydant, dosé dans les proportions ainsi déterminées, apporte une grande résistance aux essais de vieillissement accéléré.

Des prélèvements systématiques répétés ont montré, au cours du contrôle de la tenue au vieillissement accéléré de l'isolation, que la répartition de l'anti-oxydant était parfaitement homogène et que les résultats étaient reproductibles.

Une telle composition est particulièrement applicable à la réalisation d'isolants de câbles électriques, moyenne et haute tension, pour lesquels des très grandes pureté et homogénéité de la matière isolante sont requises.

Deux exemples de mise en oeuvre illustrent la présente invention, ses caractéristiques et avantages.

Exemple 1.

L'anti-oxydant de l'invention (point de fusion égal à 84°C) est préalablement dissous dans le peroxyde liquide (di-tert-butyl peroxyde) et mélangé au moyen d'une agitation appropriée. L'anti-oxydant est dissous dans une proportion de 10% en poids dans le peroxyde. Puis on introduit de façon simultanée la composition polyoléfinique, d'une part, et le peroxyde contenant l'anti-oxydant, d'autre part, dans les proportions suivantes: soit pour un câble moyenne tension

| | |
|---|---|
| polyéthylène | 100 g |
| anti-oxydant | 0,22 g |
| D T B P (peroxyde) | 2,2 g |
| soit au total: | 102,42 g |

La composition est extrudée puis réticulée dans les conditions bien connues, par exemple réticulée à 220°C sous une pression de 20 à 23 bars.

Les valeures des caractéristiques mécaniques d'une telle composition polyoléfinique, après vieillissement accéléré, sont conservées dans la proportion de 97% des valeurs initiales. Ceci concerne par exemple un vieillissement de 240 heures à 135°C dans une étuve à tirage naturel.

Exemple 2.

L'anti-oxydant de l'invention (point de fusion égal à 84°C) est mélangé par voie sèche. En effet l'anti-oxydant se présente souse forme de poudre et est mélangé à la composition polyoléfinique de base. Par exemple si l'on souhaite préparer un câble basse tension, on prépare le mélange suivant:

| | |
|---|---|
| polyéthylène | 100 g |
| anti-oxydant | 0,3 g |
| noir de carbone | 20 g |
| charges blanches | 30 g |
| soite au total: | 150,3 g |

Ce mélange est ensuite introduit de façon simultanée dans les mêmes conditions de température ambiante et de pression atmosphérique à l'entrée de l'extrudeuse. Après réticulation, les valeurs de caractéristiques mécaniques d'une telle composition sont conservées dans la proportion de 90% après un vieillissement d'une durée de 1 mois à 150°C dans une étuve à tirage d'air naturel.

**Revendications**

1. Procédé de fabrication de produits extrudés à base de compositions polyoléfiniques réticulées, du type dans lequel on introduit directement à l'entrée de la machine d'extrusion, en même temps que la composition á réticuler, un peroxyde organique liquide, volatil et inflammable à la pression atmosphérique comme agent de réticulation et, comme agent protecteur, un anti-oxydant, caractérisé par le fait que l'anti-oxydant est un composé de formule développée:

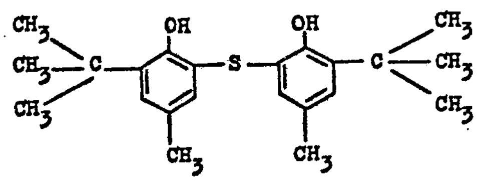

2. Procédé selon la revendication 1, dans lequel l'antioxydant est dosé puis dissous dans le peroxyde préalablement à son introduction à l'entrée de l'extrudeuse.

3. Procédé selon la revendication 1, dans lequel l'antioxydant est dosé puis mélangé à la composition polyoléfinique préalablement à son introduction à l'entrée de l'extrudeuse.

4. Procédé selon l'une des revendications 1 à 3, dans lequel l'anti-oxydant est utilisé dans une proportion de 0,15 à 0,35% en poids par rapport à la résine de base de la composition polyoléfinique.

## Claims

1. Process for manufacturing extruded products based on cross-linked polyolefinic compositions, of the type in which there are introduced directly at the inlet of the extrusion machine, at the same time as the composition to be cross-linked, a liquid organic peroxide, which is volatile and inflammable at atmospheric pressure, as cross-linking agent, and an anti-oxidant as protecting agent, characterised in that the anti-oxidant is a compound of structural formula:

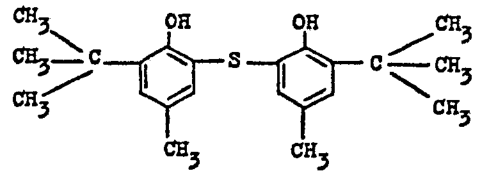

2. Process according to Claim 1, in which the anti-oxidant is dosed then dissolved in the peroxide prior to being introduced at the inlet of the extruder.

3. Process according to Claim 1, in which the anti-oxidant is dosed then mixed with the polyolefinic composition prior to being introduced at the inlet of the extruder.

4. Process according to one of Claims 1 to 3, in which the anti-oxidant is used in a proportion of 0.15 to 0.35% by weight with respect to the basic resin of the polyolefinic composition.

## Patentansprüche

1. Verfahren zur Herstellung von extrudierten Produkten auf Grund von vernetzten polyolefinischen Verbindungen der Art, worin man gerade zum Eintritt der Extrusionsmaschine, gleichzeitig mit der Verbindung zur Vernetzung, ein bei atmosphärischem Druck flüssiges, flüchtiges und entzündbares organisches Peroxid als Vernetzungsmittel und, als Schutzmittel, einen Antioxydationmittel einführt, dadurch gekennzeichnet dass der Antioxydationmittel eine Zusammensetzung der entwickelten Formel ist:

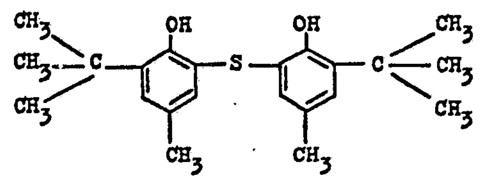

2. Verfahren nach Ansprüch 1, worin der Antioxydationmittel dosiert und danach in das Peroxid gelöst worden ist bevor seine Einführung zum Eintritt des Extruders.

3. Verfahren nach Ansprüch 1, worin der Antioxzydationmittel dosiert worden ist und danach mit der polyolefinischen Verbindung gemischt worden ist bevor seine Einführung sum Eintritt des Extruders.

4. Verfahren nach einem der Ansprüche 1 bis 3, worin der Antioxydationmittel in einer Menge von 0,15 bis 0,35 Gew.% mit Rücksicht auf das Ausgangsharz der polyolefinischen Verbindung verwendet worden ist.